# EUROPÄISCHE PATENTSCHRIFT

(11) **EP 3 194 904 B1**
(45) Veröffentlichungstag und Bekanntmachung des Hinweises auf die Patenterteilung: **02.06.2021**
(21) Anmeldenummer: 15738710.1
(22) Anmeldetag: 22.07.2015
(51) Int. Cl.: G01F 5/00, G01F 1/684, G01F 15/00, F02D 41/18

(54) **SENSORANORDNUNG ZUR BESTIMMUNG WENIGSTENS EINES PARAMETERS EINES DURCH EINE KANALSTRUKTUR STRÖMENDEN FLUIDEN MEDIUMS**
SENSOR ARRANGEMENT FOR DETERMINATION OF AT LEAST ONE PARAMETER OF A FLUID MEDIUM FLOWING IN A CHANNEL STRUCTURE
ENSEMBLE CAPTEUR POUR DÉTERMINATION D'AU MOINS UN PARAMÈTRE D'UN MILIEU FLUIDE CIRCULANT DANS UNE STRUCTURE DE CANAL

(30) Priorität: 16.09.2014 DE 102014218591
(43) Veröffentlichungstag der Anmeldung: 26.07.2017
(73) Patentinhaber: Robert Bosch GmbH, 70442 Stuttgart (DE)
(72) Erfinder: MAIS, Torsten, 71636 Ludwigsburg (DE); BRIESE, Achim, 71277 Rutesheim (DE)
(86) Internationale Anmeldenummer: PCT/EP2015/066738
(87) Internationale Veröffentlichungsnummer: WO 2016/041664

(56) Entgegenhaltungen:
- EP-A1- 1 091 195
- WO-A1-2008/128886
- DE-A1- 10 135 142
- DE-A1-102008 001 982
- DE-A1-102008 049 843
- DE-A1-102010 028 388
- DE-A1-102010 043 572
- JP-A- 2004 012 274
- US-A1- 2005 097 947

## Beschreibung

### Stand der Technik

Aus dem Stand der Technik sind zahlreiche Verfahren und Vorrichtungen zur Bestimmung einer Strömungseigenschaft fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere beschrieben unter Bezugnahme auf so genannte Heißfilmluftmassenmesser, wie sie beispielsweise in Konrad Reif (Hrsg.): Sensoren im Kraftfahrzeug, 1. Auflage 2010, Seiten 146-148 beschrieben sind. Derartige Heißfilmluftmassenmesser basieren in der Regel auf einem Sensorchip, insbesondere einem Siliziumsensorchip, mit einer Sensormembran als Messoberfläche oder Sensorbereich, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehenen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist. Dabei ist in dem Bypasskanal ein Mittel vorgesehen, welches die Strömung leitet und einer Ablösung der Strömung des Medienteilstroms von den Kanalwänden des Messkanals entgegenwirkt. Weiterhin ist der Einlassbereich des Hauptkanals im Bereich seiner Öffnung, welche der Hauptströmungsrichtung entgegenweist, mit schrägen oder gekrümmten Flächen versehen, welche so gestaltet sind, dass in den Einlassbereich einströmendes Medium von dem Teil des Hauptkanals, welcher zu dem Sensorchip führt, weggelenkt wird. Dies bewirkt, dass im Medium enthaltene Flüssigkeits- oder Festkörperteilchen aufgrund ihrer Massenträgheit nicht zu dem Sensorchip gelangen und diesen verschmutzen können.

Derartige Heißfilmluftmassenmesser müssen in der Praxis einer Vielzahl von Anforderungen und Randbedingungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit derartiger Vorrichtungen gegenüber Kontamination durch Öl- und Wassertröpfchen sowie Ruß-, Staub- und sonstige Festkörperpartikel weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstromes des Mediums im Sinne einer Veränderung der Kennlinienbeziehung zwischen dem tatsächlich auftretenden Massenstrom und dem im Rahmen der Kalibrierung bei der Fertigung ermittelten auszugebenden Signales. Bei der Ermittlung des Signal-Rausch-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Bei üblichen Heißfilmluftmassenmessern der beschriebenen Art ragt in der Regel ein Sensorträger mit einem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung in Form einer Leiterplatte, aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Trotz der durch diese Sensoranordnung bewirkten Verbesserungen besteht nach wie vor ein Verbesserungspotential hinsichtlich der Signalerfassungsgenauigkeit.

Damit der Heißfilmluftmassenmesser ein möglichst störungsarmes Luftmassensignal liefern kann, ist eine möglichst gleichmäßige Zuströmung zu dem Steckfühler und durch den Messkanal in diesem und insbesondere über die Messoberfläche des Sensorchips wichtig. Zwischen einer Stirnseite des Sensorträgers und der Wand des Messkanals existiert ein Spalt, dessen Breite fertigungstechnischen Schwankungen unterworfen ist. Im Bereich des Sensorträgers teilt sich das in dem Messkanal strömende fluide Medium in drei Teilmassenströme. Ein erster Teilmassenstrom strömt über den Sensorträger und den Sensorchip, ein zweiter Teilmassenstrom strömt unter dem Sensorträger und ein dritter Teilmassenstrom strömt durch den Spalt. Nach der Umströmung des Sensorträgers bildet sich ein instabiler Nachlauf mit schwankenden Strömungsgeschwindigkeiten und Drücken aus. Dies führt dazu, dass sich auch stromaufwärts, insbesondere im Bereich des Sensorchips, schwankende Strömungsgrößen einstellen, die zu Schwankungen, insbesondere mit für die Abmessung des Sensorträgers und die Strömungsgeschwindigkeit typischen Schwingungsmodi, im Messsignal führen.

Aus der DE 10 2008 049 843 A1 ist eine Sensoranordnung zur Bestimmung wenigstens eines Parameters eines durch eine Kanalstruktur strömenden fluiden Mediums bekannt, welche ein Sensorgehäuse, in dem die Kanalstruktur ausgebildet und mindestens einen in der Kanalstruktur angeordneten Sensorchip zur Bestimmung des Parameters des fluiden Mediums aufweist. Das Sensorgehäuse weist einen Einlass in die Kanalstruktur, der einer Hauptströmungsrichtung des fluiden Mediums entgegenweist, und einen Auslass aus der Kanalstruktur auf. Die Kanalstruktur umfasst einen Hauptkanal und einen Messkanal, wobei der Messkanal von dem Hauptkanal abzweigt, wobei der Sensorchip in dem Messkanal angeordnet ist, wobei der Hauptkanal und der Messkanal gemeinsam in den Auslass aus der Kanalstruktur münden. Der Hauptkanal weist einen ersten Hauptkanalabschnitt, in dem der Messkanal abzweigt, und einen zweiten Hauptkanalabschnitt auf, wobei der zweite Hauptkanalabschnitt an einen Vereinigungsabschnitt der Kanalstruktur angrenzt, in dem der Messkanal und der Hauptkanal zusammengeführt sind.

Eine weitere Sensoranordnung zur Bestimmung eines Parametes eines durch eine Kanalstruktur strömenden Mediums ist aus der DE 101 35 142 A1 bekannt.

### Offenbarung der Erfindung

Es wird daher eine Sensoranordnung gemäß dem angefügten unabhängigen Patentanspruch 1, zur Bestimmung wenigstens eines Parameters eines durch eine Kanalstruktur strömenden fluiden Mediums vorgeschlagen, welche die Nachteile bekannter Verfahren und Strategien zumindest weitgehend vermeiden kann und bei der sich insbesondere eine Reduzierung von Massenstromschwankungen in der Kanalstruktur, ein Signalrauschen sowie eine Anströmempfindlichkeit reduzieren lassen und die Abgleichbarkeit verbessert ist.

Die Sensoranordnung zur Bestimmung wenigstens eines Parameters eines durch eine Kanalstruktur strömenden fluiden Mediums, insbesondere eines Ansaugluftmassenstroms einer Brennkraftmaschine, weist ein Sensorgehäuse, insbesondere einen in ein Strömungsrohr eingebrachten oder einbringbaren Steckfühler, in dem die Kanalstruktur ausgebildet ist, und mindestens einen in der Kanalstruktur angeordneten Sensorchip zur Bestimmung des Parameters des fluiden Mediums auf. Das Sensorgehäuse weist einen Einlass in die Kanalstruktur, der einer Hauptströmungsrichtung des fluiden Mediums entgegenweist, und einen Auslass aus der Kanalstruktur auf. Die Kanalstruktur umfasst einen Hauptkanal und einen Messkanal. Der Messkanal zweigt von dem Hauptkanal ab. Der Sensorchip ist in dem Messkanal angeordnet. Der Hauptkanal und der Messkanal münden gemeinsam in den Auslass aus der Kanalstruktur. Der Hauptkanal weist einen ersten Hauptkanalabschnitt, in dem der Messkanal abzweigt, und einen zweiten Hauptkanalabschnitt auf, wobei der zweite Hauptkanalabschnitt an einen Vereinigungsabschnitt der Kanalstruktur angrenzt, in dem der Messkanal und der Hauptkanal zusammengeführt sind, Der zweite Hauptkanalabschnitt ist zu dem ersten Hauptkanalabschnitt in einem Winkel (β) von 10 ° bis 135 ° angeordnet, wobei der Hauptkanal einen gekrümmten Hauptkanalabschnitt aufweist, der den ersten Hauptkanalabschnitt und den zweiten Hauptkanalabschnitt verbindet, wobei ein maximaler Abstand des gekrümmten Hauptkanalabschnitts zu dem Einlass in der Hauptströmungsrichtung von 10,0 mm bis 20,0 mm ist, wobei der gekrümmte Hauptkanalabschnitt mindestens zwei Krümmungsradien aufweist, wobei ein erster Krümmungsradius, der sich stromaufwärts bezüglich der Hauptströmungsrichtung des zweiten Krümmungsradius befindet, von 3,0 mm bis 10,0 mm ist, und der zweite Krümmungsradius von 1,5 mm bis 10,0 mm ist. Der Auslass kann in einer Stirnseite des Sensorgehäuses angeordnet sein. Ein Abstand eines Mittelpunktes des Auslasses von dem Einlass in der Hauptströmungsrichtung kann von 11,0 bis 15,0 mm und bevorzugt von 12,0 mm bis 14,0 mm sein, beispielsweise 13,0 mm. Eine Mittellinie des Auslasses kann in einem Winkel von 20 ° bis 60 ° stromabwärts bezüglich der Hauptströmungsrichtung geneigt sein. Der Auslass kann eine Breite von 3,0 mm bis 8,0 mm aufweisen, beispielsweise 5,0 mm. Eine Breite des zweiten Hauptkanalabschnitts kann kleiner als eine Breite des Messkanals sein. Eine Breite des zweiten Hauptkanalabschnitts kann kleiner als eine Breite des ersten Hauptkanalabschnitts sein. Der Hauptkanal kann sich in dem gekrümmten Abschnitt verjüngen. Die Sensoranordnung kann weiterhin einen Deckel zum Verschließen des Sensorgehäuses umfassen. Die Kanalstruktur kann in dem Deckel ausgebildet sein.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie zum Beispiel Turbulenzen, unberücksichtigt bleiben können. Insbesondere kann unter der Hauptströmungsrichtung somit die lokale gemittelte Transportrichtung des strömenden fluiden Mediums verstanden werden. Die Hauptströmungsrichtung kann daher einerseits auf die Strömungsrichtung am Ort der Sensoranordnung selbst bezogen sein oder auch auf die Strömungsrichtung in dem Kanal innerhalb des Sensorgehäuses, wie beispielsweise am Ort des Sensorträgers oder des Sensorchips, wobei sich beide genannten Hauptströmungsrichtungen unterscheiden können. Im Rahmen der vorliegenden Erfindung wird deshalb stets angegeben, auf welchen Ort sich die Hauptströmungsrichtung bezieht. Sofern keine nähere Angabe gemacht ist, bezieht sich die Hauptströmungsrichtung auf den Ort der Sensoranordnung.

Unter einer stromabwärtigen Anordnung ist im Rahmen der vorliegenden Erfindung die Anordnung eines Bauteils an einer Stelle zu verstehen, die das fluide Medium in der Hauptströmungsrichtung strömend zeitlich später als einen Bezugspunkt erreicht.

Analog ist im Rahmen der vorliegenden Erfindung unter einer stromaufwärtigen Anordnung eines Bauteils eine Anordnung des Bauteils an einer Stelle zu verstehen, die das in der Hauptströmungsrichtung strömende fluide Medium zeitlich gesehen früher als an einen Bezugspunkt erreicht.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse der Sensoranordnung oder eines Steckfühlers der Sensoranordnung untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich das Elektronikmodul der Sensoranordnung stark vereinfachen und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lässt sich durch Zusammenfassung der genannten Elemente der Herstellaufwand der Sensoranordnung erheblich vermindern und der Bauraumbedarf für das Elektronikmodul stark verringern.

Die Sensoranordnung kann insbesondere mindestens ein Gehäuse aufweisen, wobei der Kanal in dem Gehäuse ausgebildet ist. Beispielsweise kann der Kanal einen Hauptkanal und einen Bypasskanal bzw. Messkanal umfassen, wobei der Sensorträger und der Sensorchip beispielsweise in dem Bypass- bzw. Messkanal angeordnet sein können. Weiterhin kann das Gehäuse einen von dem Bypasskanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind. Es versteht sich, dass alternativ der Sensorträger als an das Bodenblech angespritztes Kunststoffteil des Elektronikmoduls ausgestaltet sein kann.

Insbesondere in dem Fall, in welchem eine Leiterplatte als Sensorträger verwendet wird, jedoch auch in anderen Fällen und/oder unter Verwendung anderer Medien als Sensorträger, kann der Sensorträger zumindest teilweise als mehrschichtiger Sensorträger ausgestaltet sein. So kann der Sensorträger in einer so genannten Multilayer-Technik ausgestaltet sein und zwei oder mehrere miteinander verbundene Trägerschichten aufweisen. Beispielsweise können diese Trägerschichten wiederum aus einem Metall, einem Kunststoff oder einem Keramikmaterial oder einem Verbundmaterial hergestellt sein und durch Verbindungstechniken, wie z.B. Kleben, miteinander verbunden sein.

In diesem Fall, in welchem eine Multilayer-Technik verwendet wird mit mehreren Sensorschichten des Sensorträgers, kann die Anströmkante durch eine unterschiedliche Dimensionierung der Trägerschichten entgegen der Hauptströmungsrichtung des fluiden Mediums zumindest teilweise gestuft ausgeführt sein. Auf diese Weise lassen sich die Profile zumindest gestuft angenähert realisieren. Beispielsweise lassen sich auf diese Weise rechteckig geformte oder - angenähert durch eine Stufenform - zumindest näherungsweise rund-, abgerundete oder keilförmig geformte Profile in einer Schnittebene senkrecht zur Erstreckungsebene des Sensorträgers ausbilden. Der Sensorchip kann auf bzw. in dem Sensorträger derart angeordnet sein, dass dieser senkrecht zur lokalen Hauptströmungsrichtung ausgerichtet ist. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10 Grad von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, einen oder mehrere Leiterbahnen und/oder Kontaktpads aufweisen, welche mit entsprechenden Kontakten auf dem Sensorchip beispielsweise durch ein Bondingverfahren verbunden sind. In diesem Fall kann die elektrische Verbindung durch mindestens eine Abdeckung geschützt und von dem fluiden Medium getrennt werden. Diese Abdeckung kann insbesondere als so genannter Glob-Top ausgestaltet sein, beispielsweise als Kunststofftropfen und/oder Klebstofftropfen, welcher die elektrische Verbindung, beispielsweise die Bonddrähte abdeckt. Auf diese Weise lassen sich insbesondere auch Beeinflussungen der Strömung durch die elektrische Verbindung vermindern, da der Glob-Top eine glatte Oberfläche aufweist.

Ferner kann der Sensorchip mindestens einen Sensorbereich aufweisen. Dieser Sensorbereich kann beispielsweise eine Sensoroberfläche aus beispielsweise einem porösen, keramischen Material und/oder insbesondere eine Sensormembran sein. Die Sensormembran als Messoberfläche oder Sensorbereich kann von dem strömenden fluiden Medium überströmbar sein. Der Sensorchip umfasst beispielsweise mindestens ein Heizelement sowie mindestens zwei Temperaturfühler, welche beispielsweise auf der Messoberfläche des Sensorchips angeordnet sind, wobei ein Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

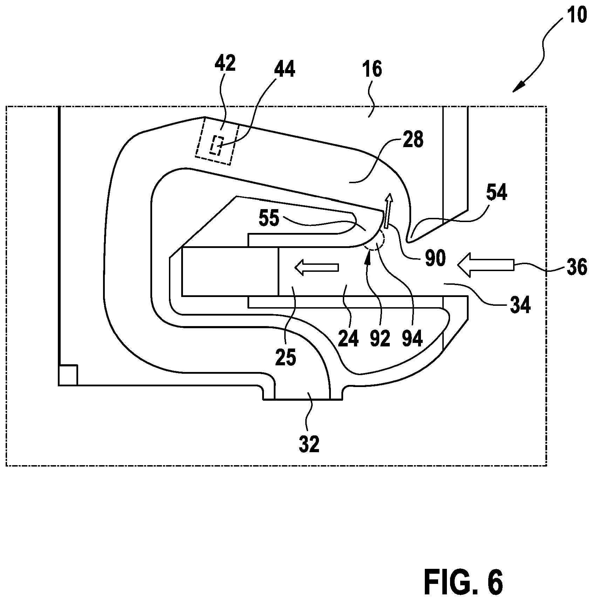

Ein Grundgedanke der vorliegenden Erfindung ist der Entfall des herkömmlichen Hauptkanalauslasses und eine Vereinigung des Hauptkanals mit dem Messkanal im Inneren der Kanalstruktur sowie eine Verschiebung des gemeinsamen Auslasses in Richtung stromaufwärts. Durch den Entfall des seitlichen Auslasses und die Positionierung des gemeinsamen Auslasses auf der Stirnseite des Steckfühlers entsteht eine nahezu symmetrische Anordnung von Einlass und Auslass, welche für eine geringere Empfindlichkeit bei Änderungen der Anströmung, insbesondere Änderung des Anstellwinkels am Steckfühler führt. Weiterhin wird das Signalrauschen reduziert, da nicht mehr zwei, unter Umständen gegenphasig schwankende Drücke an einem Hauptkanal- und einem Bypasskanal wirken sondern nur noch ein Druckniveau am gemeinsamen Auslass wirkt. Die in Figur 6 dargestellte Staupunkt-Wanderung und das Ausmaß der zeitlichen Änderung des Verhältnisses der durch beide Kanalteile gehenden Massenstromes wird dadurch reduziert. Selbst bei quasi-stationären Strömungsrandbedingungen ergibt sich durch das erfindungsgemäße Design mit einem gemeinsamen Auslass also bereits eine Reduzierung der AnströmEmpfindlichkeit und eine Reduzierung des Signalrauschens. Aufgrund der Verschiebung des gemeinsamen Auslasses stromauf ergibt sich bei Beibehaltung der Position des Einlasses eine Reduzierung des Abstandes zwischen Einlass und Auslass. Aufgrund des damit verbundenen reduzierten Anschnittes von über Ein- und Auslass laufende bzw. darüber stehende akustische Wellen, also über die damit einhergehende Reduzierung der effektiv eingetragenen Druckdifferenz folgt eine Verringerung der Massenstromschwankung in der Kanalstruktur bewirken, was wiederum zur Folge hat, dass eine betragsmäßig verringerte Massenstrom-Minderanzeige erreicht wird. Durch den Entfall des seitlichen Hauptkanalauslasses und die Bildung eines gemeinsamen Auslasses entfallen Druckdifferenzen zwischen dem Hauptkanalauslass und dem Messkanalauslass mit der Folge einer verbesserten Abgleichbarkeit.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: perspektivische Ansicht einer Sensoranordnung,
- Figur 2: eine vergrößerte Darstellung eines Elektronikmoduls der Sensoranordnung,
- Figur 3: eine Draufsicht auf den Messkanaldeckel mit dem Messkanal und dem Sensorträger,
- Figur 4: eine Rückansicht der Sensoranordnung,
- Figur 5: mögliche Verläufe von Druckwellen,
- Figur 6: eine mögliche Verteilung der Strömungsgeschwindigkeiten,
- Figur 7: eine perspektivische Ansicht einer Sensoranordnung gemäß der vorliegenden Erfindung und
- Figur 8: eine Draufsicht auf die Kanalstruktur der Sensoranordnung gemäß der vorliegenden Erfindung.

### Ausführliche Beschreibung der Ausführungsformen der Erfindung

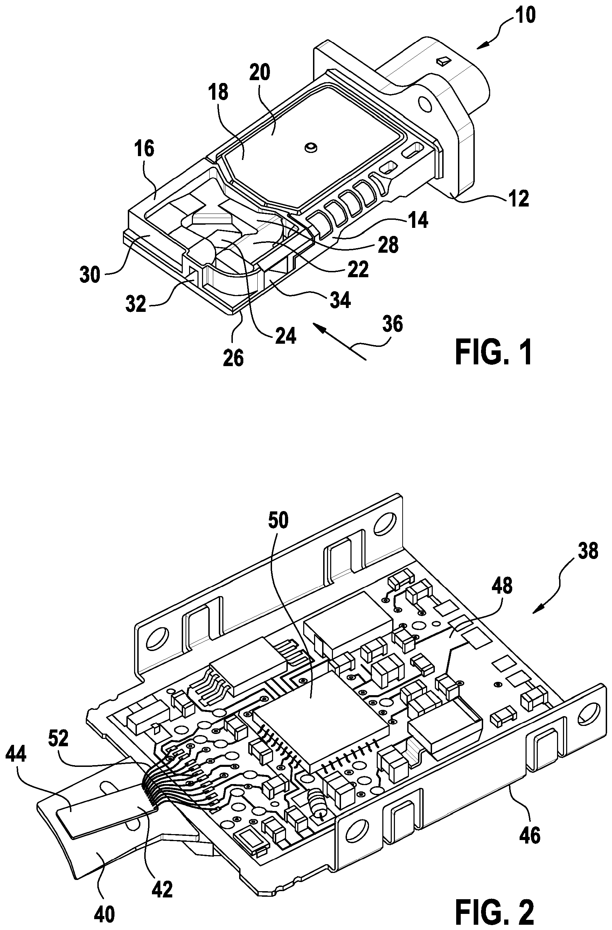

Figur 1 zeigt eine perspektivische Ansicht einer Sensoranordnung 10 zur Bestimmung eines Parameters eines fluiden Mediums. Die Sensoranordnung 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Messkanaldeckel 16 ist eine Kanalstruktur 22 ausgebildet. Die Kanalstruktur 22 weist einen Hauptkanal 24, welcher in einem Hauptkanalauslass 25 (Figur 6) auf der Unterseite 26 bezogen auf die Darstellung in Figur 1 des Sensorgehäuses 12 mündet, sowie einen von dem Hauptkanal 24 abzweigenden Bypass- bzw. Messkanal 28, welcher in einen auf einer Stirnseite 30 des Sensorgehäuses 12 angeordneten Bypass- oder Messkanalauslass 32 mündet, auf. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 der Sensoranordnung 10. In einem eingesetzten Zustand des Elektronikmoduls 38 ragt ein Sensorträger 40 in Form eines Flügels in den Messkanal 28. In diesen Sensorträger 40 ist ein Sensorchip 42 derart eingelassen, dass eine als Sensorbereich des Sensorchips 42 ausgebildete mikromechanische Sensormembran 44 von dem fluiden Medium überströmbar ist. Der Sensorträger 42 ist mit dem Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und Auswerteschaltung 50 auf. Der Sensorchip 42 ist mit der Ansteuer- und Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 in dem Gehäusekörper 14 des Sensorgehäuses 12 eingebracht, wie beispielsweise eingeklebt. Dabei ragt der Sensorträger 40 in die Kanalstruktur 22 hinein. Anschließend wird der Elektronikraum 18 von dem Elektronikraumdeckel 20 verschlossen.

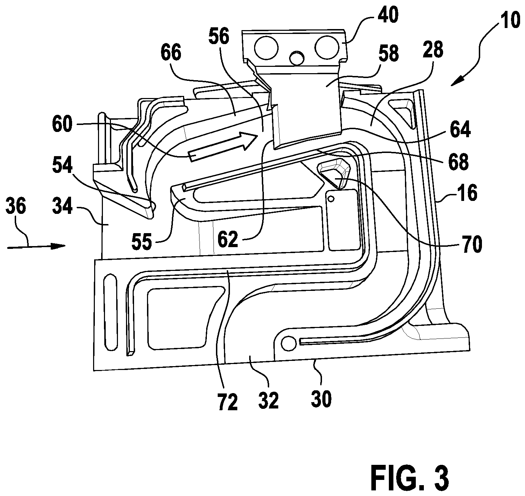

Figur 3 zeigt eine Draufsicht auf die Kanalstruktur 22 in dem Messkanaldeckel 16. In dem Messkanaldeckel 16 ist eine Fliehkraftumlenkung 54 angeordnet. Der Fliehkraftumlenkung 54 gegenüberliegend ist eine Gegenkontur 55 mit Abrisskante angeordnet. Der Messkanaldeckel 16 ist weiter so ausgebildet, dass in dem Messkanal 28 eine Messkanalrampe 56 ausgebildet ist. Des Weiteren ist aus Figur 3 die Anordnung des Sensorträgers 40 zu erkennen. Der Sensorträger 40 ragt in einem eingesetzten Zustand in den Messkanal 28. Bei der Ansicht der Figur 3 ist der Sensorträger 40 mit seiner Rück- oder Unterseite 58 zu erkennen. Die Rück- oder Unterseite 58 ist die der Sensormembran 44 gegenüberliegende Seite des Sensorträgers 40. Der Sensorträger 40 weist weiter eine einer Hauptströmungsrichtung 60 des fluiden Mediums in dem Messkanal 28 entgegenweisende Anströmkante 62, die abgerundet ausgebildet sein kann, sowie eine der Anströmkante 62 stromabwärts gegenüberliegende Hinterkante 64 auf. Die Messkanalrampe 56 erstreckt sich in dem Bereich zwischen der Fliehkraftumlenkung 54 und der Hinterkante 64 des Sensorträgers 40. Der Messkanal 28 ist zumindest im Bereich des Sensorchips 42 von dem Gehäusekörper 14, der in dem Messkanaldeckel 16 ausgebildeten Messkanalrampe 56, einem in dem Messkanaldeckel 16 ausgebildeten elektronikraumzugewandten Wandabschnitt 66 und einem in dem Messkanaldeckel 16 ausgebildeten elektronikraumabgewandten Wandabschnitt 68 begrenzt. Des Weiteren weist der Messkanaldeckel 16 eine Vertiefung 70 als Positionierkontur für einen nicht näher gezeigten Stift des Sensorgehäuses 12 bzw. des Gehäusekörpers 14 sowie Wand oder Feder 72 eines Nut-Feder-Systems zur Verklebung des Messkanaldeckels 16 mit dem Sensorgehäuse 12. Insbesondere im Bereich des Sensorträgers 40 muss ein sicherer, toleranzarmer Setz- und Klebeprozess gewährleistet sein. Die geometrischen Toleranzen beim Setzen und Verkleben des Messkanaldeckels 16 führen allerdings unter anderem auch im Bereich des Hauptkanalauslasses 25 zu Abweichungen bezüglich statischer und dynamischer Massenstromsignale, weil dort die Kanalrampe 56 in dem Messkanal 28 mit der Fensterkontur des Sensorgehäuses 12 gepaart wird.

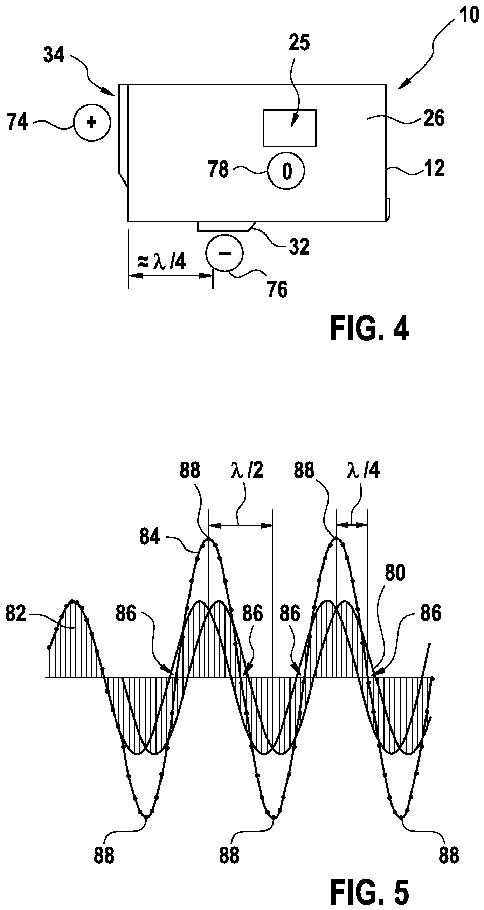

Figur 4 zeigt eine Rückansicht der Sensoranordnung 10. In Figur 4 sind die Druckverhältnisse an der Einlassöffnung 34, an dem Hauptkanalauslass 25 an und dem Messkanalauslass 32 der strömungsführenden Kanalstruktur 22 dargestellt. An der Einlassöffnung 34 herrscht ein verglichen mit dem statischen Druck der Umgebung höherer Druck 74, an dem Messkanalauslass 32 ein niedrigerer Druck 76 und an dem Hauptkanalauslass 25 ein Druck 78 in der Größenordnung des statischen Druckes der Umgebung. Diese Druckverhältnisse bewirken die Durchströmung der Kanalstruktur 22 in dem Sensorgehäuse 12. Da sich die Drücke 76, 78 an dem Messkanalauslass 32 und am Hauptkanalauslass 25 durchaus unterschiedlich stark und auch in einem anderen Verhältnis als bei der Idealdurchströmung ausprägen können und sich teilweise gegenphasig auch gegensinnige Druckerhöhungen an einem Auslass bei gleichzeitigen Druckverminderungen am anderen Auslass einstellen können, verursacht die Topologie zweier Auslässe im Zusammenspiel mit einem Einlass Massenstromschwankungen am Sensorchip 42. Diese topologiebedingten Massenstromschwankungen sollen mit der erfindungsgemäßen Ausführung der Sensoranordnung 10 reduziert werden.

Figur 5 zeigt mögliche Verläufe von Druckwellen bei derartigen Strömungsbedingungen. Als Resultat einer reflektierten einlaufenden Druckwelle 80 und einer reflektierten Druckwelle 82 ergibt sich eine überlagerte, stehende Druckwelle 84 sowie Schwingungsknoten 86 und Schwingungsbäuche 88 mit charakteristischer Viertelwellenlänge λ/4. In den Schwingungsknoten 86 herrscht das Druckniveau der aerodynamischen Grundströmung, z. B. am Sensorgehäuse 12, jeweils in Verbindung mit dem oben bezüglich Figur 4 beschriebenen Druckniveau an der Einlassöffnung 34, an dem Hauptkanalauslass 25 und an dem Messkanalauslass 32. Allerdings wird bei Entfernung von einem Schwingungsknoten 86 ein zusätzlicher Druck gemäß der Darstellung der Figur 5 aufgeprägt. Dieser Druck oszilliert von positiven zu negativen Drücken mit einer bestimmten Frequenz, woraus sich für ein bestimmtes Medium, wie beispielsweise Luft, mit seiner zugehörigen Schallgeschwindigkeit eine entsprechende Wellenlänge λ ergibt.

Schreitet man ausgehend von einem Schwingungsknoten 86ein Viertel der Wellenlange (= λ/4) entlang der Ausbreitungsrichtung der Wellen, kommt man zu einem Schwingungsbauch 88. Eine über einen festen Ort hinweglaufende Welle verursacht also Druckstörungen mit einer bestimmten Amplitude. Im Fall einer Reflexion und Ausbildung einer stehenden Welle 84 addieren sich die Amplituden zum Doppelten der Amplitude der einlaufenden Welle 80- unter Vernachlässigung von Verlusten. Im Abstand der Hälfte einer Wellenlange λ können sich von Schwingungsbauch 88 zu Schwingungsbauch 88 aufgrund der Gegensinnigkeit der Druckspitzen sogar vierfache Amplituden einstellen.

Hochfrequente akustische Druckschwingungen können im motorischen Umfeld der Sensoranordnung 10 beispielsweise aufgrund bestimmter Turboladerbetriebszustände auftreten. Dazu gehören der rotierende Strömungsabriss an den Schaufeln und das Pumpen der Turboladerstufe. Der Fall, dass ein Viertel einer akustischen Welle über der Einlassöffnung 34, dem Hauptkanalauslass 25 und dem Messkanalauslass 32 liegt, ist in Figur 4 durch den angetragenen Abstand λ/4 für die Einlassöffnung 34 und den Hauptkanalauslass 25 beispielhaft dargestellt. Für die Einlassöffnung 34 und den Messkanalauslass 32 gilt Entsprechendes. Die gemäß Figur 4 rechts vorherrschenden aerodynamischen Druckverhältnisse werden in diesem Fall von den zusätzlichen akustischen Druckschwingungen gemäß Figur 4 überlagert. Bei oben genannten Turboladerbetriebszuständen können durchaus Frequenzen in einer Größenordnung von 3 kHz und damit Wellenlängen von 100 mm bis 110 mm entstehen. Entsprechende λ/4-Wellenlängen stimmen gut mit den oben beschriebenen Distanzen zwischen der Einlassöffnung 34 und dem Hauptkanalauslass 25 bzw. dem Messkanalauslass 32 überein. Auch bei kleineren Abmessungen der Sensoranordnung 10 bleibt ein entsprechender Abschnitt einer Druckwelle über die abschnittsweise resultierenden Druckdifferenzen luftmassenstromrelevant.

Luftmassensignalwirksam wird solch eine Druckschwingung, wenn es zu einem nennenswert stark pulsierenden Luftmassenstrom im Messkanal 28 am Ort des Sensorträgers 40 kommt. In der Grenzschicht an dem Sensorchip 42 kommt es dann zu Schwankungen des Geschwindigkeitsgradienten, die den Wärmeübergang stark beeinflussen können. In der Literatur findet sich das Phänomen unter dem Begriff "2. Stokesches Problem". Aufgrund des nichtlinearen Wärmeübergangs am thermischen Messelement wird solch eine Pulsation nicht mittelwertsgetreu abgebildet. Stattdessen kommt es bei der Sensoranordnung 10 zu einer Minderanzeige.

In Figur 3 zu erkennen sind neben der bisherigen Topologie der Strömungsführung auch konstruktive Randbedingungen, die bei der erfindungsgemäßen Ausführung berücksichtigt werden müssen. Der Großteil des in das Sensorgehäuse 12 durch die Einlassöffnung 34 eintretenden Massenstromes gelangt vom Messkanalauslass 32 über den Hauptkanalauslass 25 wieder aus dem Sensorgehäuse 12 heraus. Ein kleiner Teil des Massenstromes gelangt über den Bereich der Fliehkraftumlenkung 54 und der Gegenkontur 55 mit Abrisskante in den Messkanal 28 und zu dem Sensorträger 40 mit dem Sensorchip 42 mit der mikromechanischen Sensormembran 44. Schließlich tritt der Messkanalmassenstrom über den Messkanalauslass 32 aus dem Sensorgehäuse 12 heraus. Als konstruktive Randbedingungen sind vor allem die Vertiefung 70 als Positionierkontur für einen Stift im Sensorgehäuse 12 und die Wände bzw. Federn 72 des Nut-Feder-Systems zur Verklebung von Messkanaldeckel 16 und Sensorgehäuse 12 zu nennen.

Figur 6 zeigt eine mögliche Verteilung der Strömungsgeschwindigkeiten in der Kanalstruktur 22. Die oben beschriebene Strömungstopologie führt selbst bei stationären strömungsmechanischen Randbedingungen zu einer instationären Strömung 90 an der Verzweigung 92 von Messkanal 28 und Hauptkanal 24. In Figur 6 ist die Geschwindigkeitsverteilung in einer Schnittebene durch die Kanalstruktur 22 dargestellt für einen Gesamtmassenstrom von 80 kg/h. Gut zu erkennen ist die Aufteilung des Gesamtmassenstromes an der Einlassöffnung 34 in den Massenstrom an dem Hauptkanalauslass 25 und den Massenstrom im Messkanal 28. Charakterisierend für die Verzweigung ist der Staupunkt 94 auf der Wand der Gegenkontur 55 gegenüber der Fliehkraftumlenkung 54. Das Verhältnis der abzweigenden Massenströme ist selbst bei stationären strömungsmechanischen Randbedingungen nicht konstant, sondern wandert entsprechend den strömungsmechanischen Randbedingungen Gesamtmassenstrom, Drücken an der Einlassöffnung, an dem Hauptkanalauslass 25, an dem Messkanalauslass 32, Turbulenzgrad, Anstellwinkel des Sensorgehäuses 12 im Strömungsrohr etc., weil sowohl die Umströmung des Sensorgehäuses 12 als auch die Durchströmung der Kanalstruktur 22 im Sensorgehäuse so gut wie immer instationären Charakter besitzt. Selbst ohne eine Überlagerung mit zusätzlichen akustischen Druckschwingungen sorgt also die Verzweigungstopologie mit getrennten Auslässen für den Hauptstrom- sowie den Bypasskanal für Massenstromschwankungen an der mikromechanischen Sensormembran 44. Entsprechend den dazugehörenden Frequenzen können diese Schwankungen kennlinienrelevant sein oder für ein höheres Signalrauschen sorgen.

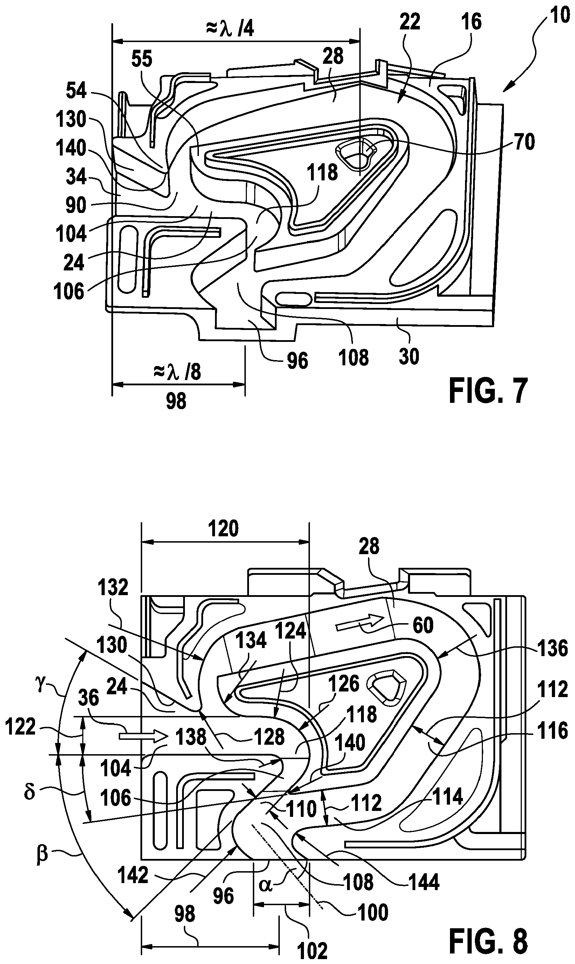

Figur 7 zeigt eine perspektivische Ansicht einer Sensoranordnung 10 gemäß der vorliegenden Erfindung. Dabei werden insbesondere die Unterschiede zu der oben beschriebenen herkömmlichen Sensoranordnung beschrieben. Die Kanalstruktur 22 ist so ausgebildet, dass der Messkanal 28 von dem Hauptkanal 24 an der Verzweigung 92 abzweigt. Allerdings münden der Hauptkanal 24 und der Messkanal 28 gemeinsam in einen in der Stirnseite 30 angeordneten Auslass 96. Der Hauptkanalauslass 25 entfällt somit.

Figur 8 zeigt eine Draufsicht auf die Kanalstruktur 22 der Sensoranordnung 10 gemäß der vorliegenden Erfindung. Ein Abstand 98 eines Mittelpunktes des Auslasses 96 von der Einlassöffnung 34 in der Hauptströmungsrichtung 36 ist von 11,0 mm bis 15,0 mm und bevorzugt von 12,0 mm bis 14,0 mm, beispielsweise 13,0 mm. Eine Mittellinie 100 des Auslasses 96 ist in einem Winkel α von 30 ° bis 50 ° stromabwärts bezüglich der Hauptströmungsrichtung 36 geneigt, beispielsweise 40 °. Der Auslass 96 weist eine Breite 102 von 3,0 mm bis 8,0 mm auf, beispielsweise 5,0 mm. Durch die besondere Ausbildung der Kanalstruktur 22 weist der Hauptkanal 24 mindestens einen ersten Hauptkanalabschnitt 104, in dem der Messkanal 28 abzweigt, und einen zweiten Hauptkanalabschnitt 106 auf. Der zweite Hauptkanalabschnitt 106 grenzt dabei an einen Vereinigungsabschnitt 108 der Kanalstruktur 22 an, in dem der Messkanal 28 und der Hauptkanal 24 zusammengeführt sind. Der zweite Hauptkanalabschnitt 106 ist zu dem ersten Hauptkanalabschnitt 104 in einem Winkel β von 10 ° bis 135 ° angeordnet, beispielsweise 45,5 °. Eine Breite 110 des zweiten Hauptkanalabschnitts 106 ist kleiner als eine Breite 112 des Messkanals 28. So weist der zweite Hauptkanalabschnitt 106 eine Breite 110 von 1,0 mm bis 5,0 mm auf, beispielsweise 2,2 mm, wohingegen der Messkanal 28 eine Breite 112 von 2,0 mm oder 3,0 mm bis 6,0 mm, beispielsweise 4,0 mm, in Abhängigkeit davon, ob die Breite 112 an einer Stelle 114 oder einer breiteren Stelle 116 bestimmt wird.

Der Hauptkanal 24 weist weiterhin mindestens einen gekrümmten Hauptkanalabschnitt 118 auf, der den ersten Hauptkanalabschnitt 104 und den zweiten Hauptkanalabschnitt 106 verbindet. Ein maximaler Abstand 120 des gekrümmten Hauptkanalabschnitts 118 zu der Einlassöffnung 34 in der Hauptströmungsrichtung 36 ist von 10,0 mm bis 20,0 mm, beispielsweise 15,22 mm. Außerdem ist die Breite 110 des zweiten Hauptkanalabschnitts 106 kleiner als eine Breite 122 des ersten Hauptkanalabschnitts 104. So ist die Breite 122 des ersten Hauptkanalabschnitts 104 von 2,0 mm bis 6,0 mm, beispielsweise 4,2 mm. Folglich verjüngt sich der Hauptkanal 24 in dem gekrümmten Hauptkanalabschnitt 118. Der gekrümmte Hauptkanalabschnitt 118 weist mindestens zwei Krümmungsradien 124, 126 auf. Ein erster Krümmungsradius 124, der sich stromaufwärts bezüglich der Hauptströmungsrichtung 36 des zweiten Krümmungsradius 126 befindet, ist von 3,0 mm bis 10,0 mm, beispielsweise 5,0 mm, wohingegen der zweite Krümmungsradius 126 von 1,5 mm bis 10,0 mm ist, beispielsweise 3,8 mm.

Die Kanalstruktur 22 kann dabei die weiteren folgenden geometrischen Abmessungen aufweisen. Die Fliehkraftumlenkung 54 selbst kann abgerundet ausgebildet sein und eine Radius 128 für die Abrundung von 0,1 mm bis 0,5 mm aufweisen, beispielsweise 0,3 mm. Eine an die Fliehkraftumlenkung 54 angrenzende und sich in Richtung zu der Einlassöffnung 34 erstreckende Kanalwand 130 des Hauptkanals 54 kann zu der der Fliehkraftumlenkung 54 gegenüberliegenden Kanalwand in einem Winkel γ von 15 ° bis 45 °, beispielsweise 30 °, geneigt ausgebildet sein. Die an die Fliehkraftumlenkung 54 angrenzende Kanalwand des Messkanals 28 kann gekrümmt ausgebildet sein mit einem Radius 132 von 3,0 mm bis 8,0 mm, beispielsweise 6,0 mm. Die Gegenkontur 55 kann ebenfalls gekrümmt ausgebildet sein mit einem Radius 134 von 2,0 mm bis 6,0 mm, beispielsweise 3,0 mm. Stromabwärts bezüglich der Hauptströmungsrichtung 60 in dem Messkanal 28 kann der Messkanal 28 gekrümmt ausgebildet sein mit einem Radius 136 von 4,0 mm bis 10,0 mm, beispielsweise 7,0 mm. Der gekrümmte Hauptkanalabschnitt 118 kann dabei auf seiner dem Messkanal 28 abgewandten Wandseite einen Radius 138 von 0,1 mm bis 2,0 mm aufweisen, beispielsweise 0,8 mm. Ein Wandabschnitt, an dem sich der Hauptkanal 24 und der Messkanal 28 vereinen, kann gekrümmt ausgebildet sein mit einem Radius 140 von 0,1 mm bis 2,0 mm, beispielsweise 0,1 mm. Der Wandabschnitt, an dem sich der Hauptkanal 24 und der Messkanal 28 vereinen, kann zu der der Fliehkraftumlenkung 54 gegenüberliegenden Kanalwand in einem Winkel δ von 0° bis 45 °, beispielsweise 9,1 °, angeordnet sein. Die Kanalstruktur 22 kann sich weiterhin gekrümmt zu dem Auslass 96 erstrecken mit einem Radius 142 von 1,0 mm bis 5,0 mm, beispielsweise 2,8 mm, und einem Radius 144 von 0,25 mm bis 3,0 mm, beispielsweise 1,0 mm.

Zusammenfassend wird bei der erfindungsgemäßen Sensoranordnung entfällt der seitliche Hauptkanalauslass 25, der Hauptkanal 24 wird mit dem Messkanal 28 vereinigt und der Massenstrom wird durch einen gemeinsamen Auslass 96 aus dem Sensorgehäuse 12 geführt. Über die Anpassung des Verzweigungsbereiches an der Fliehkraftumlenkung 54 in Form des Radius und des Versatzes der gegenüberliegenden Wand, den Verlauf des Hauptkanals 24 in Form von Konvergenz, Innen- und Außenradius zur Vereinigungsstelle von Hauptkanal 24 und Messkanal 28 und über die Gestaltung des Vereinigungsbereiches in Form von Kanalbreiten, Radius an der Vereinigungsstelle, Achsausrichtung der beiden Kanäle, kann die Durchströmung bezüglich diverser Anforderungen wie Signalhub, Kennlinienstabilität, Signalrauschen, Abscheidewirkung bei Kontamination, Verhalten bei konventioneller, niederfrequenter Pulsation sowie bei akustischen, hochfrequenten Druckschwingungen eingestellt werden.

Aufgrund der Möglichkeit, das Feder-Nut-System sowie die Positionierkontur kompakt zu halten, ergibt sich ein geometrischer Gestaltungsraum zur Optimierung der Länge und Formgebung des Messkanals stromabwärts des Sensorträgers 40, insbesondere zur Einstellung des Verhaltens bei niederfrequenten Pulsationen mit hohen Amplituden. Ebenfalls von Bedeutung ist die Eingriffsmöglichkeit über unterschiedliche Verrundungen im Bereich der Umlenkung des Hauptkanals 24 und im Vereinigungsbereich von Hauptkanal 24 und Messkanal 28.

## Patentansprüche

1. Sensoranordnung (10) zur Bestimmung wenigstens eines Parameters eines durch eine Kanalstruktur (22) strömenden fluiden Mediums, insbesondere eines Ansaugluftmassenstroms einer Brennkraftmaschine, wobei die Sensoranordnung (10) ein Sensorgehäuse (12), insbesondere einen in ein Strömungsrohr eingebrachten oder einbringbaren Steckfühler, in dem die Kanalstruktur (22) ausgebildet ist, und mindestens einen in der Kanalstruktur (22) angeordneten Sensorchip (42) zur Bestimmung des Parameters des fluiden Mediums aufweist, wobei das Sensorgehäuse (12) einen Einlass (34) in die Kanalstruktur (22), der einer Hauptströmungsrichtung (36) des fluiden Mediums entgegenweist, und einen Auslass (96) aus der Kanalstruktur (22) aufweist, wobei die Kanalstruktur (22) einen Hauptkanal (24) und einen Messkanal (28) umfasst, wobei der Messkanal (28) von dem Hauptkanal (24) abzweigt, wobei der Sensorchip (42) in dem Messkanal (28) angeordnet ist, wobei der Hauptkanal (24) und der Messkanal (28) gemeinsam in den Auslass (96) aus der Kanalstruktur (22) münden, wobei der Hauptkanal (24) mindestens einen ersten Hauptkanalabschnitt (104), in dem der Messkanal (28) abzweigt, und einen zweiten Hauptkanalabschnitt (106) aufweist, wobei der zweite Hauptkanalabschnitt (106) an einen Vereinigungsabschnitt (108) der Kanalstruktur (22) angrenzt, in dem der Messkanal (28) und der Hauptkanal (24) zusammengeführt sind, wobei der zweite Hauptkanalabschnitt (106) zu dem ersten Hauptkanalabschnitt (104) in einem Winkel (ß) von 10 ° bis 135 ° angeordnet ist, **dadurch gekennzeichnet, dass** der Hauptkanal (24) einen gekrümmten Hauptkanalabschnitt (118) aufweist, der den ersten Hauptkanalabschnitt (104) und den zweiten Hauptkanalabschnitt (106) verbindet, wobei ein maximaler Abstand (120) des gekrümmten Hauptkanalabschnitts (118) zu dem Einlass (34) in der Hauptströmungsrichtung (36) von 10,0 mm bis 20,0 mm ist, wobei der gekrümmte Hauptkanalabschnitt (118) mindestens zwei Krümmungsradien (124, 126) aufweist, wobei ein erster Krümmungsradius (124), der sich stromaufwärts bezüglich der Hauptströmungsrichtung (36) des zweiten Krümmungsradius (126) befindet, von 3,0 mm bis 10,0 mm ist, und der zweite Krümmungsradius (126) von 1,5 mm bis 10,0 mm ist.

2. Sensoranordnung (10) nach dem vorhergehenden Anspruch, wobei der Auslass (96) in einer Stirnseite (30) des Sensorgehäuses (12) angeordnet ist.

3. Sensoranordnung (10) nach einem der vorhergehenden Ansprüche, wobei ein Abstand (98) eines Mittelpunktes des Auslasses (96) von dem Einlass (34) in der Hauptströmungsrichtung (36) von 11,0 mm bis 15,0 mm und bevorzugt von 12,0 mm bis 14,0 mm ist.

4. Sensoranordnung (10) nach einem der vorhergehenden Ansprüche, wobei eine Mittellinie (100) des Auslasses (96) in einem Winkel von 30 ° bis 50 ° stromabwärts bezüglich der Hauptströmungsrichtung (36) geneigt ist.

5. Sensoranordnung (10) nach einem der vorhergehenden Ansprüche, wobei der Auslass (96) eine Breite (110) von 3,0 mm bis 8,0 mm aufweist.

6. Sensoranordnung (10) nach einem der vorhergehenden Ansprüche, wobei eine Breite (110) des zweiten Hauptkanalabschnitts (106) kleiner als eine Breite (112) des Messkanals (28) ist.

7. Sensoranordnung (10) nach dem vorhergehenden Anspruch, wobei eine Breite (110) des zweiten Hauptkanalabschnitts (106) kleiner als eine Breite (122) des ersten Hauptkanalabschnitts (104) ist.

8. Sensoranordnung (10) nach einem der vorhergehenden Ansprüche, wobei sich der Hauptkanal (24) in dem gekrümmten Hauptkanalabschnitt (118) verjüngt.

## Claims

1. Sensor arrangement (10) for determining at least one parameter of a fluid medium flowing through a duct structure (22), in particular an intake air mass flow of an internal combustion engine, wherein the sensor arrangement (10) has a sensor housing (12), in particular a plug-in sensor which is inserted or can be inserted into a flow pipe and in which the duct structure (22) is formed, and at least one sensor chip (42) for determining the parameter of the fluid medium, which sensor chip is arranged in the duct structure (22), wherein the sensor housing (12) has an inlet (34) into the duct structure (22), which inlet faces counter to a main flow direction (36) of the fluid medium, and an outlet (96) out of the duct structure (22), wherein the duct structure (22) comprises a main duct (24) and a measuring duct (28), wherein the measuring duct (28) branches away from the main duct (24), wherein the sensor chip (42) is arranged in the measuring duct (28), wherein the main duct (24) and the measuring duct (28) jointly issue into the outlet (96) out of the duct structure (22), wherein the main duct (24) has at least one first main duct section (104), in which the measuring duct (28) branches away, and a second main duct section (106), wherein the second main duct section (106) adjoins a combining section (108) of the duct structure (22), in which combining section the measuring duct (28) and the main duct (24) are combined, wherein the second main duct section (106) is arranged at an angle (β) of from 10° to 135° in relation to the first main duct section (104), **characterized in that** the main duct (24) has a curved main duct section (118) which connects the first main duct section (104) and the second main duct section (106), wherein a maximum distance (120) of the curved main duct section (118) from the inlet (34) in the main flow direction (36) is from 10.0 mm to 20.0 mm, wherein the curved main duct section (118) has at least two radii of curvature (124, 126), wherein a first radius of curvature (124), which is located upstream of the second radius of curvature (126) with respect to the main flow direction (36), is from 3.0 mm to 10.0 mm and the second radius of curvature (126) is from 1.5 mm to 10.0 mm.

2. Sensor arrangement (10) according to the preceding claim, wherein the outlet (96) is arranged in an end face (30) of the sensor housing (12).

3. Sensor arrangement (10) according to either of the preceding claims, wherein a distance (98) of a centre point of the outlet (96) from the inlet (34) in the main flow direction (36) is from 11.0 mm to 15.0 mm and preferably from 12.0 mm to 14.0 mm.

4. Sensor arrangement (10) according to one of the preceding claims, wherein a centre line (100) of the outlet (96) is inclined at an angle of from 30° to 50° downstream with respect to the main flow direction (36).

5. Sensor arrangement (10) according to one of the preceding claims, wherein the outlet (96) has a width (110) of from 3.0 mm to 8.0 mm.

6. Sensor arrangement (10) according to one of the preceding claims, wherein a width (110) of the second main duct section (106) is less than a width (112) of the measuring duct (28).

7. Sensor arrangement (10) according to the preceding claim, wherein a width (110) of the second main duct section (106) is less than a width (122) of the first main duct section (104).

8. Sensor arrangement (10) according to one of the preceding claims, wherein the main duct (24) tapers in the curved main duct section (118).

## Revendications

1. Ensemble formant capteur (10) destiné à déterminer au moins un paramètre d'un milieu fluide s'écoulant à travers une structure de canal (22), en particulier un débit massique d'air d'admission d'un moteur à combustion interne, l'ensemble formant capteur (10) comportant un boîtier de capteur (12), en particulier un capteur enfichable qui est ou peut être introduit dans un tube d'écoulement et dans lequel est ménagée la structure de canal (22), et au moins une puce de capteur (42) disposée dans la structure de canal (22) pour déterminer le paramètre du milieu fluide, le boîtier de capteur (12) comportant une entrée (34) qui mène dans la structure de canal (22) et qui est dirigée dans la direction opposée à une direction d'écoulement principale (36) du milieu fluide, et une sortie (96) de la structure de canal (22), la structure de canal (22) comprenant un canal principal (24) et un canal de mesure (28), le canal de mesure (28) bifurquant du canal principal (24), la puce de capteur (42) étant disposée dans le canal de mesure (28), le canal principal (24) et le canal de mesure (28) débouchant conjointement dans la sortie (96) de la structure de canal (22), le canal principal (24) comportant au moins une première portion de canal principal (104), dans laquelle le canal de mesure (28) bifurque, et une deuxième portion de canal principal (106), la deuxième portion de canal principal (106) étant contiguë à une portion d'union (108) de la structure de canal (22) dans laquelle le canal de mesure (28) et le canal principal (24) sont réunis, la deuxième portion de canal principal (106) étant disposée par rapport à la première portion de canal principal (104) de manière à former un angle (β) de 10° à 135°, **caractérisé en ce que** le canal principal (24) comporte une portion de canal principal incurvée (118) qui relie la première portion de canal principal (104) et la deuxième portion de canal principal (106), la distance maximale (120) de la portion de canal principal incurvée (118) à l'entrée (34) dans la direction d'écoulement principale (36) étant de 10,0 mm à 20,0 mm, la portion de canal principal incurvée (118) comportant au moins deux rayons de courbure (124, 126), un premier rayon de courbure (124) qui est en amont du deuxième rayon de courbure (126) par rapport à la direction d'écoulement principale (36) étant de 3,0 mm à 10,0 mm, et le deuxième rayon de courbure (126) étant de 1,5 mm à 10,0 mm.

2. Ensemble formant capteur (10) selon la revendication précédente, la sortie (96) étant disposée dans une face frontale (30) du boîtier de capteur (12).

3. Ensemble formant capteur (10) selon l'une des revendications précédentes, la distance (98) d'un point central de la sortie (96) à l'entrée (34) dans la direction d'écoulement principale (36) étant de 11,0 mm à 15,0 mm et de préférence de 12,0 mm à 14,0 mm.

4. Ensemble formant capteur (10) selon l'une des revendications précédentes, une ligne médiane (100) de la sortie (96) étant inclinée d'un angle de 30° à 50° en aval par rapport à la direction d'écoulement principale (36).

5. Ensemble formant capteur (10) selon l'une des revendications précédentes, la sortie (96) ayant une largeur (110) de 3,0 mm à 8,0 mm.

6. Ensemble formant capteur (10) selon l'une des revendications précédentes, la largeur (110) de la deuxième portion de canal principal (106) étant inférieure à la largeur (112) du canal de mesure (28).

7. Ensemble formant capteur (10) selon la revendication précédente, la largeur (110) de la deuxième portion de canal principal (106) étant inférieure à la largeur (122) de la première portion de canal principal (104).

8. Ensemble formant capteur (10) selon l'une des revendications précédentes, le canal principal (24) se rétrécit dans la portion de canal principal incurvée (118) .
